# EUROPEAN PATENT APPLICATION

(11) **EP 4 734 475 A1**
(43) Date of publication of application: **29.04.2026**
(21) Application number: 25176288.6
(22) Date of filing: 14.05.2025
(51) Int. Cl.: H04L 61/4511, H04L 67/59

(54) **PROXY PUBLISHER FOR MULTICAST DOMAIN NAME SYSTEM (MDNS) SERVICES AND SYSTEM AND METHOD THEREOF**

(30) Priority: 23.10.2024 IN 202411080827; 23.12.2024 GB 202418956
(71) Applicant: Cambium Networks Ltd, Ashburton, Devon TQ13 7UP (GB)
(72) Inventor: ATREYA, Vivek Lakshminarayana, 560003 Bangalore (IN); ANKAIAH, Shashi Hosakere, 560076 Bangalore (IN); MIRANDA, Trevor, San Francisco, 94133 (US)
(74) Representative: EIP

(57) **Abstract**

This disclosure relates to method and network device for proxy publishing mDNS services. The method includes identifying at least one end-device not publishing mDNS services within a network. The method further includes determining at least one service provided by each of the at least one end-device. The at least one service is not published as mDNS service within the network. The method further includes publishing the at least one service as at least one mDNS service within the network.

## Description

### Technical Field

The present disclosure relates generally to multicast Domain Name System (mDNS), and more specifically, but not exclusively, to proxy publisher for mDNS services and system and method thereof.

### Background

BONJOUR^{®} or multicast Domain Name System (mDNS) is a popular service discovery portocol that may be deployed on a network, for example, a Local Area Network (LAN). Under the mDNS protocol, end-devices such as printers, music players, and the like, announce their services on the network using the mDNS protocol. Other end-devices in the network, such as, phones, tabs, and laptops are able to easily discover these end-devices and the services provided by them. Moreover, users can use these servies without requiring any configuration. Thus, mDNS is also referred to as a zero configuration protocol.

However, several end-devices on the network may offer services but may not be able to publish these services using the mDNS protocol. Such end-devices may either not be configured to do so or may not have mDNS capabilities. The services, for example, may include Internet of Things (IoT) based services, printing service, web-servers based service, or file sharing services. Moreover, in closed devices, for example, loT devices and network equipment, because of the computational resource constraints, they cannot even be configured to publish services using the mDNS protocol. Also, though mDNS publisher can be configured on servers and open systems in order to enable them to publish services using the mDNS protocol, an administrator may be required to install and set up the mDNS publisher. Moreover, support for such software may vary based on the device Operating System (OS) and application ecosystem associated with the device.

Therefore, the present invention is directed to overcome one or more limitations stated above or any other limitations associated with the known arts.

### SUMMARY

In accordance with a first aspect of the disclosure there is provided a method for proxy publishing Multicast Domain Name System (mDNS) services. The method may include identifying, by a network device, at least one end-device not publishing mDNS services within a network. The method may further include determining, by the network device, at least one service provided by each of the at least one end-device. It may be noted that the at least one service is not published as mDNS service within the network. The method may further include publishing, by the network device, the at least one service as at least one mDNS service within the network.

In accordance with a second aspect of the disclosure there is provided a network device. The network device may include a processor, and a memory communicably coupled to the processor and comprising processor instructions that when executed by the processor, cause the processor to identify at least one end-device not publishing mDNS services within a network. The processor may further cause the processor to determine at least one service provided by each of the at least one end-device. It may be noted that the at least one service is not published as mDNS service within the network. The processor may further cause the processor to publish the at least one service as at least one mDNS service within the network.

In accordance with a third aspect of the disclosure there is provided a non-transitory computer-readable medium storing computer-executable instructions for proxy publishing mDNS services is disclosed. In one example, the stored instructions, when executed by a processor, may cause the processor to identify at least one end-device not publishing mDNS services within a network. The operations may further include determining at least one service provided by each of the at least one end-device. It may be noted that the at least one service is not published as mDNS service within the network. The operations may further include publishing the at least one service as at least one mDNS service within the network.

Further features of the disclosure will be apparent from the following description of preferred embodiments of the disclosure, which are given by way of example only.

### BRIEF DESCRIPTION OF THE DRAWINGS

The present application can be best understood by reference to the following description taken in conjunction with the accompanying drawing figures, in which like parts may be referred to by like numerals.
**FIG. 1** depicts a communication network where various embodiments may be employed.
**FIG. 2** depicts a network device configured to proxy publish multicast Domain Name System (mDNS) services in a communication network, in an embodiment of the disclosure.
**FIG. 3** is a flow diagram depicting communication flow between a network device proxy publishing mDNS services, a first end-device, and a second end-device within a communication network, in an embodiment of the disclosure.
**FIG. 4** illustrates a flowchart of an exemplary method for proxy publishing mDNS services in a communication network, in an embodiment of the disclosure.
**FIG. 5** illustrates a flowchart of an exemplary method for determining services provided by end-devices that are not being published as mDNS services in a communication network, in an embodiment of the disclosure.
**FIG. 6** illustrates a flowchart of an exemplary method for selectively publishing mDNS services in a communication network, in an embodiment of the disclosure.
**FIG. 7** illustrates a flowchart of an exemplary method for processing an mDNS request received from an end-device that came online after proxy publishing of mDNS services by a network device, in an embodiment of the disclosure.

### DETAILED DESCRIPTION

The following description is presented to enable a person of ordinary skill in the art to make and use the disclosure and is provided in the context of particular applications and their requirements. Various modifications to the embodiments will be readily apparent to those skilled in the art, and the generic principles defined herein may be applied to other embodiments and applications without departing from the spirit and scope of the disclosure. Moreover, in the following description, numerous details are set forth for the purpose of explanation. However, one of ordinary skill in the art will realize that the disclosure might be practiced without the use of these specific details. In other instances, well-known structures and devices are shown in block diagram form in order not to obscure the description of the disclosure with unnecessary detail. Thus, the disclosure is not intended to be limited to the embodiments shown but is to be accorded the widest scope consistent with the principles and features disclosed herein.

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

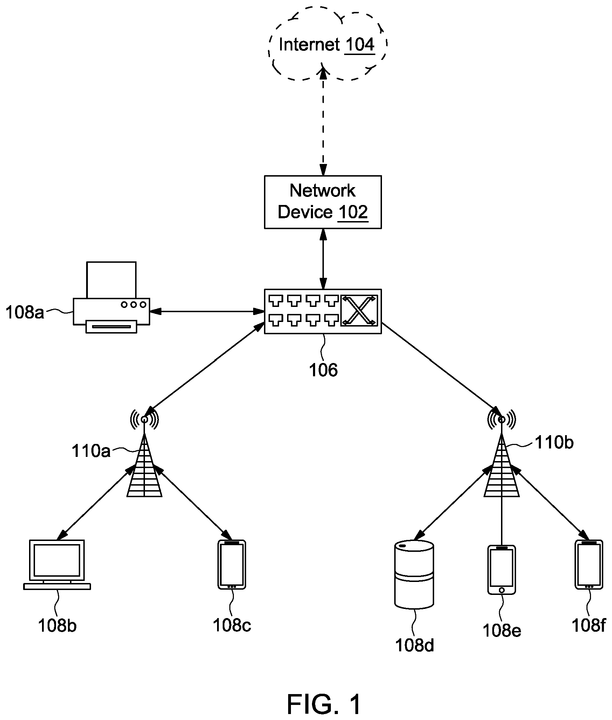

**FIG. 1** depicts a communication network 100 where various embodiments may be employed. Various embodiments to be employed may be related to a proxy multicast Domain Name System (mDNS) publisher. The communication network 100 may be a Local Area Network (LAN) and may include a network device 102. The network device 102, for example, may be a router or a gateway. The network device 102 is communicatively coupled to a network switch 106 that acts as a bridge between a plurality of end-devices 108 and the network device 102. The plurality of end-devices 108 may include, but are not limited to a printer 108a, a laptop 108b, a smartphone 108c, an Internet of Things (IoT) device 108d, a mobile phone 108e, or a tablet 108f. The network switch 106 may include a plurality of switch ports (not shown in FIG. 1) and may be communicatively coupled to each of the plurality of end-devices 108 through one or more of the plurality of switch ports either directly through a wired connection or via a wireless Access Points (APs) 110 (for example, a wireless AP 110a and a wireless AP 110b).

On the other side, the network device 102 may also be communicatively coupled to the internet 104. Thus, while the network switch 106 along with the plurality of end-devices 108 and the wireless APs 110 may form the LAN that is connected to the network device 102, the internet 104 may form a Wide Area Network (WAN). In other words, while the network switch 106 controls access of the plurality of end-devices 108 to the network device 102, the network device 102 further controls access of the plurality of end-devices 108 to the internet 104.

Within the communication network 100, which may be a LAN, some devices, for example, the laptop 108b and the smartphone 108c, may be capable of publishing the hosted services via the mDNS protocol. However, some devices, for example, the printer 108a and the loT device 108d, may not be capable of publishing the hosted services via the mDNS protocol, as they are either not configured to do so or have no mDNS capabilities. For example, the loT device 108d may be a closed device or a headless device, such that access to the system configuration of the loT device 108d may be limited and restricted. The closed or headless devices, because of computation resource constraints may have limited capabilities and may further not allow view, access, or modification of configuration data. Thus, setting up the loT device 108d for mDNS capabilities may not be feasible. By way of another example, the mobile phone 108e, which is an open device, may be capable of publishing services using the mDNS protocol, but may not currently be publishing a given service via the mDNS protocol, as it is not currently configured to do so. An mDNS publisher may be installed to configure the mobile phone 108e for mDNS capabilities. However, an administrator may be required for setting up and configuring the mDNS publisher on the mobile phone 108e.

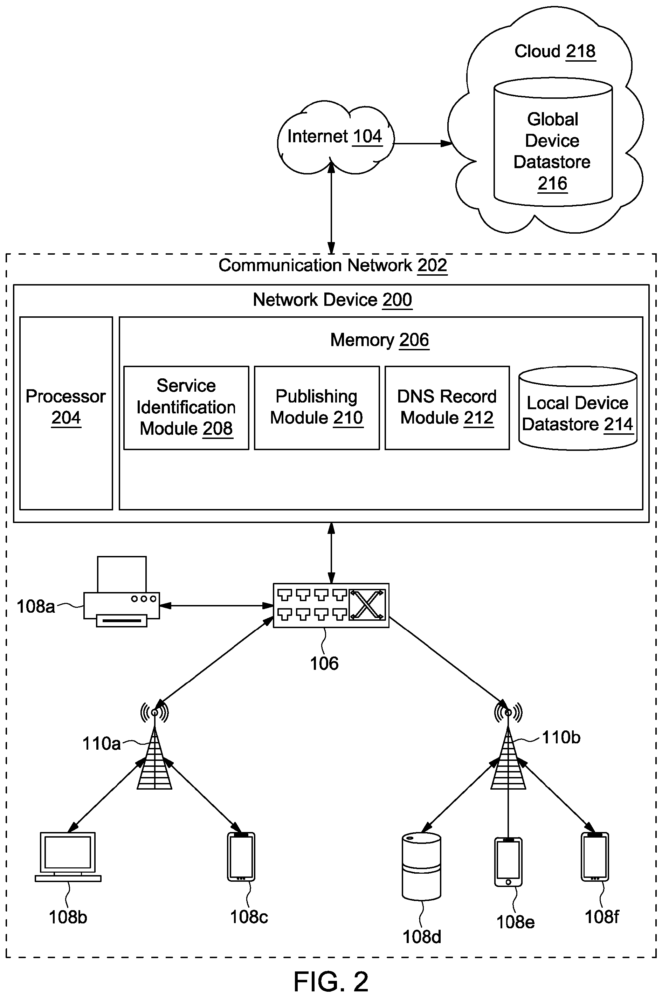

**FIG. 2** depicts a network device 200 configured to proxy publish mDNS services in a communication network 202, in an embodiment of the disclosure. The functionalities and capabilities explained for the network device 200 are from the perspective of a router or a gateway. However, similar functionalities and capabilities may be configured within a network switch or an AP as well.

The network device 200 may include a processor 204 and a memory 206. Examples of the processor 204 may include, but are not limited to, an Intel^{®} Itanium^{®} or Itanium 2 processor(s), or AMD^{®} Opteron^{®} or Athlon MP^{®} processor(s), Motorola^{®} lines of processors, Nvidia^{®}, FortiSOC^{™} system on a chip processors or other future processors. The memory 206 may be a non-volatile memory or a volatile memory. Examples of the non-volatile memory may include but are not limited to, a flash memory, a Read Only Memory (ROM), a Programmable ROM (PROM), Erasable PROM (EPROM), and Electrically EPROM (EEPROM) memory. Examples of the volatile memory may include but are not limited to, Dynamic Random Access Memory (DRAM), and Static Random-Access memory (SRAM).

In an embodiment, the memory 206 may store instructions that, when executed by the processor 204, may cause the processor 204 to proxy publish mDNS services on behalf of few end-devices in the communication network 202, as discussed in more detail below. The memory 206 may further include a service identification module 208, a publishing module 210, and a DNS record module 212. The network device 200 may further include a local device datastore 214. The local device datastore 214 may store attributes of the plurality of end-devices 108 mapped to respective identifiers (IDs). In an embodiment, the attributes of an end-device may include, but are not limited to, Media Access Control (MAC) address, an identity of the end-device, make and brand of the end-device, whether the end-device is closed or not, a type associated with the end-device, Operating System (OS) used by the end-device, and the OS Version. In some embodiments, the MAC address may act as an ID for an end-device. In addition to the local device datastore 214, the network device 200 may also communicate, via the internet 104, with a global device datastore 216 that is stored on a cloud 218. The global device datastore 216 may include similar data as the local device datastore 214, but for a larger set of end-devices that includes the plurality of end-devices 108. The local device datastore 214 may be regularly updated by periodically synching with the global device datastore 222.

The communication network 202 may include one or more end-devices that may not be capable of publishing services using the mDNS protocol. For ease of reference, services published using the mDNS protocol may be referred to as mDNS services henceforth. In order to proxy publish these services using the mDNS protocol, the service identification module 208 may identify one or more end-devices from the plurality of end-devices 108 that are not publishing mDNS services within the communication network 202.

In an embodiment, to identify the one or more end-devices not publishing mDNS services within the communication network 202, the service identification module 208 may determine inability of the one or more end-devices to publish mDNS services. In other words, the one or more end-devices may lack the capability to publish mDNS services. To determine inability of the one or more end-devices, the service identification module 208 may identify absence of mDNS messages published by the one or more end-devices in the communication network 202. In other words, the service identification module 208 may determine that there are no mDNS messages published by these end-devices in the communication network 202. An mDNS message, for example, may be a multicast User Datagram Protocol (UDP) packet sent using the IPv4 address 224.0.0.251 or IPv6 address ff02::fb, or UDP port 5353. When ethernet frames are used, the mDNS message may be sent using the standard IP multicast MAC address, i.e., 01:00:5E:00:00:FB (for IPv4) or 33:33:00:00:00:FB (for IPv6).

Alternatively, or additionally, the service identification module 208 may determine inability of the one or more end-devices to publish mDNS services by retrieving a set of attributes associated with each of the plurality of end-devices 108 in the communication network 202 from the local device datastore 214. It may be noted that the set of attributes associated with each of the plurality of end-devices 108 may be retrieved using one or more fingerprinting techniques as well for latest and up to date information about the plurality of end-devices 108. An example of a fingerprinting technique may be Dynamic Host Configuration Protocol (DHCP) fingerprinting. In addition to performing fingerprinting, a port scan may also be performed for each of the plurality of end-devices 108.

To perform a port scan, a network packet (for example, a UDP packet or a Transmission Control Protocol (TCP) packet) may be sent to the set of ports associated with each of the one or more end-devices. Examples of port scanning techniques may include, but are not limited to one or more of ping scans, vanilla scan, SYN scan, XMAS and FIN scans, FTP bounce scan, and sweep scan. In some embodiments, fingerprinting techniques may also include port scanning. Further, the service identification module 208 may identify the one or more end-devices from the plurality of end-devices 108. The set of attributes associated with each of one or more end-devices may indicate their inability to publish mDNS services.

In some embodiments, the service identification module 208 may identify the one or more end-devices that are not publishing mDNS services as those end-devices that are abstaining from publishing one or more mDNS services in the communication network 202. In other words, though these one or more end-devices are capable of publishing mDNS services, they may not be publishing a few services that they are hosting, as mDNS services.

Thereafter, the service identification module 208 may determine one or more services provided by each of the one or more end-devices. These one or more services are the ones that are not currently being published as mDNS services within the communication network 202. In order to determine the one or more services provided by each of the one or more end-devices, the service identification module 208 may scan a set of ports associated with each of the one or more end-devices. Based on a response received from the set of ports associated with each of the one or more end-devices while performing the port scan, services hosted on each of the set of ports may also be determined along with other details. Other details may include but are not limited to whether a given port is open, closed, or filtered. Thus, the service identification module 208 may identify one or more services provided on at least one of the associated set of ports.

The set of ports may be logical ports that may be an endpoint to a logical connection that describes a service in TCP/Internet Protocol and UDP. There may be 65536 TCP ports and 65536 UDP ports. The logical ports may include well-known ports, registered ports, or dynamic ports. The well-known ports range from and range from 0 to 1023. Each of the well-known ports is assigned to a specific protocol and thus used for a specific services. For example, port 20, 21 are for File Transfer Protocols (FTP), port 23 is for Telnet, port 53 is for DNS, port 80 is for Hyper Text Transfer Protocol (HTTP), and the like. Thus, for the well-known ports, the hosted services may be determined based on the predefined assignment. The registered ports range from 1024 to 49,151 and are assigned as per the requirement within a network to host proprietary services or applications. The dynamic ports range from 49,152 to 65,535 and are available to host any service or application.

Once the service identification module 208 determines the one or more services that are not currently being published as mDNS services within the communication network 202, the publishing module 210 may publish the one or more services as one or more mDNS services within the communication network 202. In some embodiments, packets used to publish the one or more mDNS services may include DNS records or a portion thereof associated with each of the one or more mDNS services. These DNS records may be provided by the DNS record module 212 that may maintain this information for the one or more end-devices. The DNS record may include instructions that live in authoritative DNS servers. The DNS record may provide information that may include IP address associated with a port hosting the mDNS service. The DNS record, for example, may include A record (which include the IPv4 address), AAAA record (which includes the IPv6 address), CNAME record that forwards one domain or subdomain to another domain, PTR record, SRV record that provides a port for a specific service, TXT record that lets an admin store text notes in records, and the like.

In some embodiments, before publishing the one or more services as mDNS services, the publishing module 210 may compare details of an mDNS service and the end-device associated with the mDNS service with an mDNS publishing policy. Based on the result of the comparing, the publishing module 210 may determine whether the mDNS service is eligible for publishing or not. Accordingly, the publishing module 210 may publish the mDNS service in the communication network 202 or may abstain from publishing the mDNS service in the communication network 202.

Once the publishing module 210 has published the one or more services as the one or more mDNS services in the communication network 202, the DNS record module 212 may receive a query using the mDNS protocol for an mDNS service published on behalf of an end-device in the communication network 102. For ease of reference, a query received using the mDNS protocol may be referred to as an mDNS query henceforth. In response to the mDNS query, the DNS record module 212 may provide a DNS record associated with the mDNS service to an end-device that generated the mDNS query. In some embodiments, an end-device may come online after the one or more mDNS services have been published in the communication network 202. In such case, an mDNS query generated by the end-device for an mDNS service may be received by the network device 200. The service identification module 208 may identify receipt of the mDNS query. In response, the service identification module 208 may determine current availability of the mDNS service. Based on availability of the mDNS service, the DNS record module 212 may provide a DNS record associated with the mDNS service to the end-device in response to the mDNS query.

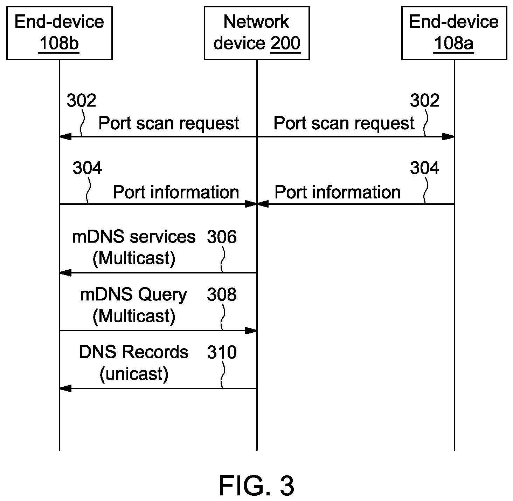

**FIG. 3** is a flow diagram depicting communication flow between the network device 200 proxy publishing mDNS services, the end-device 108a, and the end-device 108b within the communication network 202, in an embodiment of the disclosure. FIG. 3 is explained in conjunction with FIG. 2. The end-device 108a (i.e., the printer 108a) may be hosting one or more services (i.e., printing services) which are not being published as mDNS services in the communication network 202. Additionally, the end-device 108b (i.e., the laptop 108b) may need printing services within the communication network 202.

In order to proxy publish mDNS services, the network device 200 initiates 302 a port scan request in the communication network 202, which may be received by the end-device 108a and the end-device 108b. It will be apparent to a person skilled in the art that the port scan request is received by each end-device in the communication network 202 and two end-devices are shown for ease of depiction and explanation. In response to the port scan request, the end-device 108a and the end-device 108b may transmit 304 port information related to respective ports.

Upon receipt of the port information, especially with regards to services associated with a given port, the network device 200 may identify the one or more services hosted by the end-device 108a that are not being published using the mDNS protocol. The network device 200 may then publish 306 these one or more services hosted by the end-device 108a as mDNS services in the communication network 202. Based on the mDNS services published by the network device 200, the end-device 108b may send 308 an mDNS query for a specific service (for example, printing service), that may currently be hosted by the end-device 108a. In some embodiment, the end-device 108b may come online after the mDNS services are published by the network device 200. In such case, the mDNS query may be sent without knowledge of the mDNS service being available in the communication network 202.

The mDNS query is received by the network device 200, and in response, the network device 200 provides 310 DNS records to the end-device 108b. The DNS records are associated with the end-device 108a and specifically the mDNS service (i.e., printing service) requested by the end-device 108b. The DNS record may provide information that may include IP address associated with a port hosting the mDNS service (i.e., printing service). Based on the DNS records, the end-device 108b may be able to connect to the port hosting the requested mDNS service on the end-device 108a.

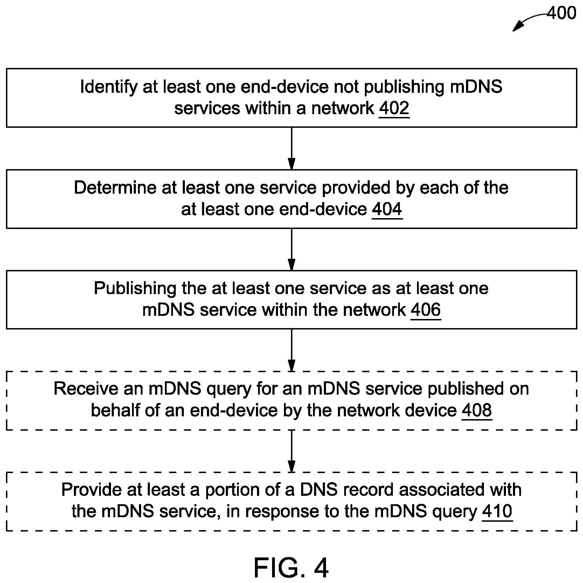

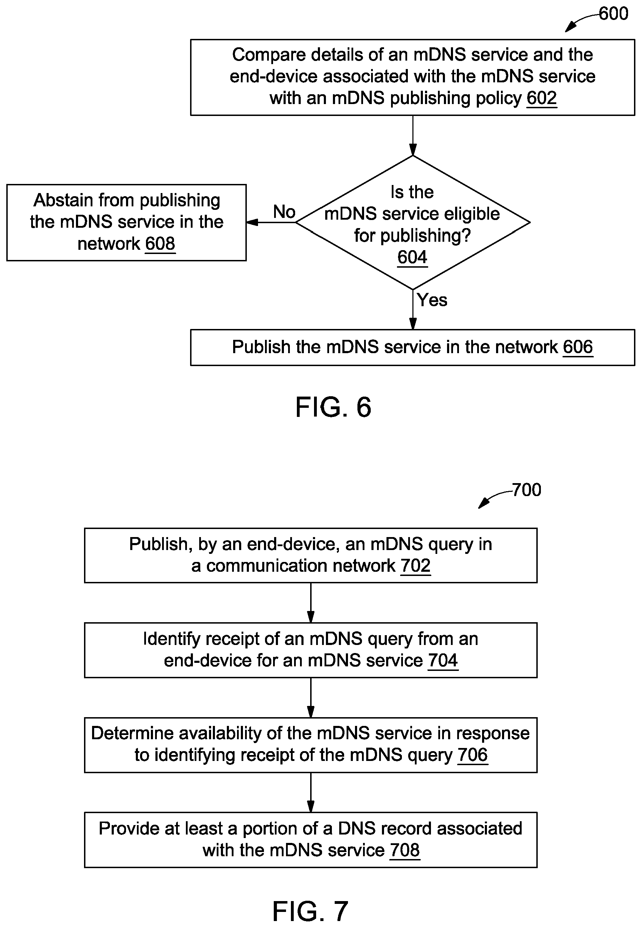

**FIG. 4** illustrates a flowchart of an exemplary method for proxy publishing mDNS services in a communication network, in an embodiment of the disclosure. FIG. 6 is explained in conjunction with FIG. 2 and FIG. 3. At step 402, network device 200 may identify one or more end-devices that are not publishing mDNS services within the communication network. Thereafter, at step 404, the network device 200 may determine one or more services provided by each of the one or more end-devices. These one or more services are the ones that are not being published as mDNS services within the communication network. By way of an example, the network device 200 may identify that the printer 108a is not publishing mDNS services within the communication network 202. Further, the network device 200 may determine that the printer 108a is not publishing printing services as mDNS service in the communication network 202.

At step 406, the network device 200 may publish the one or more services as one or more mDNS services within the communication network. In continuation of the example given above, the network device 200 may publish the printing services of the printer 108a as an mDNS service within the communication network 202. In some embodiments, the network device 200 may receive an mDNS query for an mDNS service published on behalf of an end-device by the network device, at step 408. In response, at step 410, the network device 200 may provide at least a portion of a DNS record associated with the mDNS service. In continuation of the example given above, the network device 200 may receive an mDNS query from the end-device 108b for a printing service, and on behalf of the printer 108a, the network device 200 may provide DNS records associated with the printing service provided by the printer 108a to the end-device 108b, which may then connect with the printer 108b.

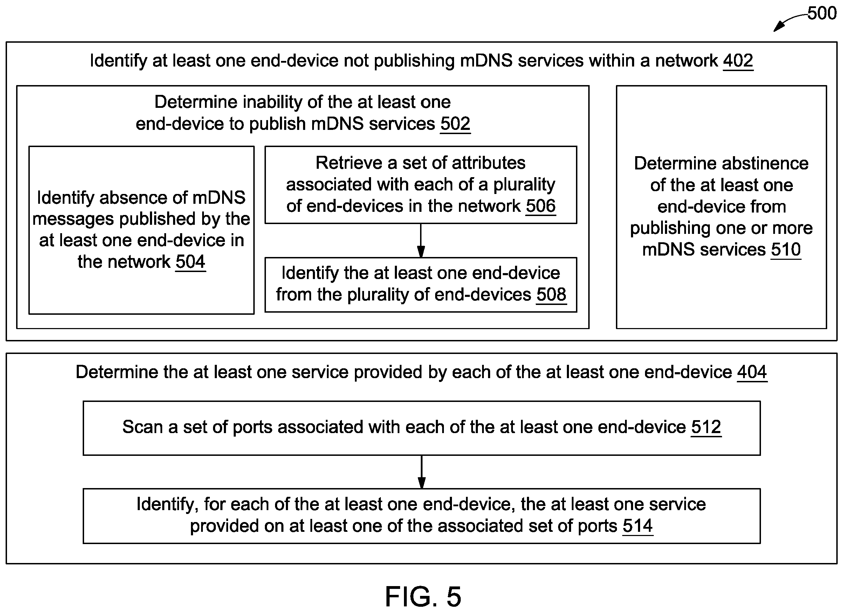

**FIG. 5** illustrates a flowchart of an exemplary method for determining services provided by end-devices that are not being published as mDNS services in a communication network, in an embodiment of the disclosure. FIG. 5 is explained in conjunction with FIG. 2 and FIG. 4. In an embodiment, to identify, at step 402, one or more end-devices that are not publishing mDNS services within the communication network, the network device 200 may determine inability of the one or more end-devices to publish mDNS services, at step 502. In other words, the network device 200 may determine that the one or more end-devices are not capable of publishing mDNS services.

The inability of the one or more end-devices to publish mDNS services may be determined by identifying, at step 504, absence of any mDNS message published by the one or more end-devices in the network. In continuation of the example given above, the network device 200 may not receive any mDNS messages (service publication) from the printer 108a and may accordingly determine inability of the printer 108a to publish printing services using the mDNS protocol. Alternatively, or additionally, this inability of the one or more end-devices may be determined by retrieving, at step 506, a set of attributes associated with each of a plurality of end-devices in the communication network. The set of attributes associated with each of the one or more end-devices may indicate their inability to publish mDNS services. Accordingly, at step 508, the network device 200 may identify the one or more end-devices. In continuation of the example given above, the network device 200 may retrieve a set of attributes associated with the printer 108a along with other end-devices 108 in the communication network 202. Based on an analysis of the set of attributes associated with the printer 108a, the network device 108a may identify and determine that the printer 108a has inability to publish mDNS services. In other words, the printer 108a is not configured to publish mDNS services.

In an alternate embodiment, to identify the one or more end-devices that are not publishing mDNS services in the communication network, the network device 200, at step 510, may determine abstinence of the one or more end-devices from publishing mDNS services. These one or more end-devices may otherwise be capable of publishing mDNS services; however, they may not be publishing some of the mDNS services. By way of an example, the network device 200 may determine that the laptop 108b may have the capability of publishing mDNS services but may not be publishing a specific service that is being hosted on one of the ports of the laptop 108b.

After identifying the one or more end-devices that are not publishing mDNS services, the network device 200, at step 404, may determine one or more services provided by the one or more end-devices identified at step 402. In order to determine the one or more services provided by each of the one or more end-devices, the network device 200 may scan a set of ports associated with each of the one or more end-devices, at step 512. For each of the one or more end-devices, the network device 200 may identify the one or more services provided on one or more of the associated set of ports, at step 514. This has already been explained in detail in conjunction with FIG. 2.

**FIG. 6** illustrates a flowchart of an exemplary method for selectively publishing mDNS services in a communication network. FIG. 6 is explained in conjunction with FIG. 2 and FIG. 4. At step 602, the network device 200 may compare details of an mDNS service and the end-device associated with the mDNS service with an mDNS publishing policy. The mDNS publishing policy may be created by an administrator specifically for the communication network and may be stored within the memory 206 of the network device 200. The network device 200 may include multiple such mDNS publishing policies based on the number of communication networks it is connected to. The mDNS publishing policy may include details with regard to a type associated with mDNS services that can be published and those that cannot be published within a given communication network. By way of an example, for a given communication network owned by an organization, the mDNS publishing policy may restrict publishing of printing services using mDNS protocol, as printing rights may be restricted to people with selected roles in the organization.

Based on the comparing, the network device 200, at step 604, may perform a check to determine whether the mDNS service is eligible for publishing or not. If the mDNS service is eligible for publishing, the network device 200 may publish the mDNS service in the communication network at step 606. However, if the mDNS is not eligible for publishing, the network device 200 may abstain from publishing the mDNS service in the communication network, at step 608. By way of an example, the mDNS publishing policy associated with the communication network may restrict publication of printing services using mDNS protocol. Thus, when network device 200 identifies printing services hosted by the printer 108a for publication as an mDNS service (since the printer 108a is not configured for mDNS protocol), the network device 200 first compares the printing service with the mDNS publishing policy. As the mDNS publishing policy restricts publication of printing services in the communication network, the network device 200 abstains from publishing the printing service using mDNS protocol in the communication network.

**FIG. 7** illustrates a flowchart of an exemplary method for processing an mDNS request received from an end-device that came online after proxy publishing of mDNS services by the network device 200, in an embodiment of the disclosure. In an embodiment, at the time when the network device 200 published one or more mDNS services in the communication network 202, the end-device may be offline. As a result, the end-device may not be aware of the one or more mDNS services proxy published by the network device 200. The end-device may come online subsequent to the one or more mDNS services being proxy published in the communication network.

At step 702, the end-device may publish an mDNS query for an mDNS service in the communication network. At step 704, the network device 200 may identify receipt of the mDNS query from the end-device. At step 706, the network device 200 may determine availability of the mDNS service. Based on availability of the mDNS service, the network device 200 may provide at least a portion of a DNS record associated with the mDNS service to the end-device, at step 708. This has already been explained in detail in conjunction with FIG. 2.

As will be appreciated by those skilled in the art, the techniques described in the various embodiments discussed above are not routine, or conventional, or well understood in the art. The techniques discussed in the present disclosure for proxy publishing mDNS services address the challenges faced by end-devices, especially, closed end-devices that are not capable of publishing services using the mDNS protocol. The technique enables publishing of services on behalf of the end-devices that are either not capable of publishing services using mDNS protocol or are not currently configured for the same. This includes the end-devices that are currently abstaining from broadcasting one or more services as mDNS services.

The techniques discussed in the present disclosure for proxy publishing mDNS services address the challenges by using device fingerprinting of all the end-devices on the network and by performing a port scan for all the end-devices. By performing device fingerprinting and port scan, the network device enumerates all services that are currently running within a communication network (for example, a LAN) and corresponding ports hosting these services. As a result, the network device also identifies devices that do no support mDNS, i.e., are either not capable of publishing services using the mDNS protocol or are not currently configured for the same. The network device may use this information to publish mDNS services on behalf of such end-devices. The network device may automatically publish such discovered services and also respond to mDNS queries on behalf of such end-devices. The network device may also consult an mDNS publishing policy defined for a given communication network to decide whether a given service can be published or not. Thus, problems existing in the present conventional solutions are addressed.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure, which is defined in the accompanying claims.

It will be appreciated that, for clarity purposes, the above description has described embodiments of the disclosure with reference to different functional units and processors. However, it will be apparent that any suitable distribution of functionality between different functional units, processors or domains may be used without detracting from the disclosure. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present disclosure has been described in connection with some embodiments, it is not intended to be limited to the specific form set forth herein. Rather, the scope of the present disclosure is limited only by the claims. Additionally, although a feature may appear to be described in connection with particular embodiments, one skilled in the art would recognize that various features of the described embodiments may be combined in accordance with the disclosure.

Furthermore, although individually listed, a plurality of means, elements or process steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

## Claims

1. A method for proxy publishing Multicast Domain Name System (mDNS) services, the method comprising:
identifying, by a network device, at least one end-device not publishing mDNS services within a network;
determining, by the network device, at least one service provided by the at least one end-device, wherein the at least one service is not published as an mDNS service within the network; and
publishing, by the network device, the at least one service as at least one mDNS service within the network.

2. The method of claim 1, further comprising:
receiving, by the network device, an mDNS query for an mDNS service published on behalf of an end-device by the network device; and
providing, by the network device, at least a portion of a DNS record associated with the mDNS service, in response to the mDNS query.

3. The method of claim 1 or claim 2, wherein identifying the at least one end-device comprises determining inability of the at least one end-device to publish mDNS services.

4. The method of claim 3, wherein determining inability of the at least one end-device comprises identifying absence of mDNS messages published by the at least one end-device in the network.

5. The method of claim 3 or claim 4, wherein determining inability of the at least one end-device comprises:
retrieving, for each of a plurality of end-devices in the network, a set of attributes associated with a respective one of the plurality of end-devices in the network; and
identifying the at least one end-device from the plurality of end-devices, wherein the set of attributes associated with the at least one end-device indicate inability of the at least one end-device to publish mDNS services.

6. The method of claim 1 or claim 2, wherein identifying the at least one end-device comprises determining abstinence of the at least one end-device from publishing one or more mDNS services, wherein the at least one end-device is capable of publishing mDNS services.

7. The method of any preceding claim, wherein determining the at least one service provided by the at least one end-device comprises:
scanning a set of ports associated with the at least one end-device;
identifying, for the at least one end-device, the at least one service provided on at least one of the associated set of ports.

8. The method of any preceding claim, wherein publishing the at least one service comprises:
comparing details of a service from the at least one service and an end-device associated with the service with an mDNS publishing policy; and
determining whether the service is eligible for publishing as an mDNS service, based on the comparing.

9. The method of claim 8, wherein the service is published in the network as the mDNS service, in response to determining that the service is eligible for publishing.

10. The method of claim 8, wherein the service is not published as the mDNS service, in response to determining that the service is not eligible for publishing in the network.

11. The method of claim 8 or claim 9, wherein the end-device is a first end-device and the at least one end-device comprises a second end-device associated with a further service that is not published as an mDNS service within the network, and wherein the method comprises:
comparing details of the further service and the second end-device with the mDNS publishing policy;
determining whether the further service is eligible for publishing as an mDNS service, based on the comparing; and
in response to determining that the further service is not eligible for publishing in the network, abstaining from publishing the further service as an mDNS service.

12. The method of any preceding claim, further comprising:
identifying receipt of an mDNS query from an end-device for an mDNS service, wherein the end-device came online subsequent to publishing of the at least one mDNS service in the network;
determining availability of the mDNS service in response to identifying receipt of the mDNS query; and
providing at least a portion of a DNS record associated with the mDNS service, in response to the mDNS query.

13. A network device for proxy publishing Multicast Domain Name System (mDNS) services, the network device comprising:
a processor; and
a memory communicably coupled to the processor and comprising processor instructions that when executed by the processor, cause the processor to:
identify at least one end-device not publishing mDNS services within a network;
determine at least one service provided by the at least one end-device, wherein the at least one service is not published as an mDNS service within the network; and
publish the at least one service as at least one mDNS service within the network.

14. The network device of 13, wherein to publish the at least one service, the processor instructions further cause the processor to:
compare details of a service from the at least one service and an end-device associated with the service with an mDNS publishing policy; and
determine whether the service is eligible for publishing as an mDNS service, based on the comparing,
optionally, wherein the service is published in the network as the mDNS service, in response to determining that the service is eligible for publishing, and
optionally, wherein the end-device is a first end-device and the at least one end-device comprises a second end-device associated with a further service that is not published as an mDNS service within the network, and wherein the processor instructions cause the processor:
compare details of the further service and the second end-device with the mDNS publishing policy;
determine whether the first service is eligible for publishing as an mDNS service, based on the comparing; and
in response to determining that the further service is not eligible for publishing in the network, abstain from publishing the further service as an mDNS service.

15. A non-transitory computer-readable medium storing computer-executable instructions for proxy publishing Multicast Domain Name System (mDNS) services, the computer-executable instructions configured for:
identifying, via a network device, at least one end-device not publishing mDNS services within a network;
determining, via the network device, at least one service provided by the at least one end-device, wherein the at least one service is not published as an mDNS service within the network; and
publishing, via the network device, the at least one service as at least one mDNS service within the network.
